(19) Europäisches Patentamt
European Patent Office
Office européen des brevets

(11) EP 4 351 087 A1

(12) EUROPEAN PATENT APPLICATION
published in accordance with Art. 153(4) EPC

(43) Date of publication:
10.04.2024 Bulletin 2024/15

(51) International Patent Classification (IPC):
H04L 9/40 (2022.01)

(21) Application number: 22932490.0

(22) Date of filing: 30.09.2022

(86) International application number:
PCT/CN2022/123294

(87) International publication number:
WO 2024/000903 (04.01.2024 Gazette 2024/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.06.2022 CN 202210762423

(71) Applicant: Forenova Technologies B.V
Nanshan
Shenzhen, Guangdong 518057 (CN)

(72) Inventors:
• SHEN, Yiping
1043 GR Amsterdam (NL)
• YUAN, Jason
1043 GR Amsterdam (NL)
• CHEN, Chen
1043 GR Amsterdam (NL)

• LI, Da
1043 GR Amsterdam (NL)
• HUANG, Lei
1043 GR Amsterdam (NL)
• XUE, Congming
1043 GR Amsterdam (NL)
• DUAN, Yanzhong
1043 GR Amsterdam (NL)
• JI, Zhongxu
1043 GR Amsterdam (NL)
• LIU, Tao
1043 GR Amsterdam (NL)
• WANG, Yun
1043 GR Amsterdam (NL)

(74) Representative: Patentanwaltskanzlei
Matschnig & Forsthuber OG
Biberstraße 22
Postfach 36
1010 Wien (AT)

(54) TRAFFIC DETECTION METHOD AND APPARATUS, AND DEVICE AND READABLE STORAGE MEDIUM

(57) Provided are traffic detection method, traffic detection apparatus, a device and a readable storage medium. In the solution, for the communication traffic between the target host and the devices, the path-sharing traffic in the communication traffic is grouped based on the preset time interval, so that the traffic groups for different transmission time periods are obtained. Then, the statistics is performed on the feature set of traffic transmission in each of the traffic groups. Finally, it is determined whether the path-sharing traffic is abnormal based on a statistical result of identical ones of the feature sets of traffic transmission. The communication traffic between the target host and the devices is detected, so that the comprehensiveness of the detection is improved. In addition, authentic transmission of the communication traffic can be detected. Therefore, a rate of mistaken determination is reduced, and the accuracy in detecting malicious traffic is improved.

Figure 1

## Description

This application claims priority to Chinese Patent Application No. 202210762423.1, titled "TRAFFIC DETECTION METHOD AND APPARATUS, DEVICE AND READABLE STORAGE MEDIUM", filed on June 30, 2022 with the China National Intellectual Property Administration, which is incorporated herein by reference in its entirety.

## FIELD

The present disclosure relates to the field of computer technology, and in particular to traffic detection method and apparatus, a device and a readable storage medium.

## BACKGROUND

Generally, malware communicates with a C2 server (Command & Control Server, C&C) in a heartbeat online manner. The malware periodically sends a heartbeat message to the C2 server, and the C2 server periodically forwards a malicious message to an attacked host. The message for the C2 server accessing the attacked host is generally periodic. Therefore, it may be detected whether traffic for accessing the attacked host is periodic, so as to determine whether the traffic is malicious. A conventional periodicity detection algorithm is not applicable to calculation for both a long period and a short period. That is, periodicity detected by using the conventional periodicity detection algorithm is not accurate. Traffic may be mistakenly determined malicious due to merely the periodicity of the traffic. That is, normal traffic having periodicity is easily to be mistakenly determined as malicious traffic.

Therefore, how to improve accuracy in detecting malicious traffic is a problem to be solved by those skilled in the art.

## SUMMARY

In view of the above, an objective of the present disclosure is to provide traffic detection method and apparatus, a device and a readable storage medium to improve accuracy in detecting malicious traffic. Solutions are described below.

In a first aspect, traffic detection method is provided according to the present disclosure. The method includes: obtaining communication traffic between a target host and other devices; grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission.

In an embodiment, the feature set of traffic transmission in traffic group includes any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets.

In an embodiment, the traffic detection method further includes: obtaining certificate information of the uplink traffic in the path-sharing traffic, where the uplink traffic refers to traffic from one of the other devices to the target host; and proceeding, in a case that the certificate information fails to meet a preset security condition, to the steps of: grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission.

In an embodiment, the case that the certificate information fails to meet a preset security condition includes at least one of the following: a certificate in the certificate information being self-signed, a certificate in the certificate information being encrypted in a free manner, and a certificate in the certificate information is not authenticated by the target host.

In an embodiment, the determining whether the path-sharing traffic is abnormal based on a statistical result of identical ones of the feature sets of traffic transmission includes: determining, as the statistical result, a ratio of a number of identical feature sets of traffic transmission to a total number of feature sets of traffic transmission; determining that the path-sharing traffic is abnormal, in a case that the statistical result is greater than a preset first threshold; and determining that the path-sharing traffic is normal in a case that the statistical result is less than or equal to the preset first threshold.

In an embodiment, the traffic detection method further includes: determining, by using a sliding time window, a number of occurrences of uplink traffic of the path-sharing traffic within each time window, to obtain a sequence of numbers of occurrences, where the uplink traffic refers to traffic from one of the other devices to the target host; determining, based on the sequence of numbers of occurrences, whether the uplink traffic has an uplink period; and determining, in a case the uplink traffic has an uplink period, whether the uplink traffic is abnormal based on the uplink period.

In an embodiment, the traffic detection method further includes: summarizing a determination result for the path-sharing traffic and a determination result for the uplink traffic to obtain a comprehensive determination result.

In an embodiment, the traffic detection method further includes: determining, by using a sliding time window, at least one of a size of downlink traffic or a size of uplink traffic in the path-sharing traffic communicated within each time window, to obtain at least one of a sequence of sizes of the uplink traffic and a sequence of sizes of the downlink traffic; and proceeding, in a case that a dispersion degree of elements in the at least one of the sequence of sizes of the uplink traffic and the sequence of sizes of the downlink traffic is not greater than a dispersion degree threshold, to the steps of: determining, by using a sliding time window, a number of occurrences of uplink traffic of the path-sharing traffic within each time window, to obtain an sequence of numbers of occurrences, where the uplink traffic refers to traffic from a device to the target host; determining, based on the sequence of numbers of occurrences, whether the uplink traffic has an uplink period; and determining, in a case the uplink traffic has an uplink period, whether the uplink traffic is abnormal based on the uplink period.

In an embodiment, the traffic detection method further includes proceeding, in a case that traffic in the uplink traffic has similarity, to the steps of: determining, by using a sliding time window, a number of occurrences of uplink traffic of the path-sharing traffic within each time window, to obtain a sequence of numbers of occurrences, where the uplink traffic refers to traffic from a device to the target host; determining, based on the sequence of numbers of occurrences, whether the uplink traffic has an uplink period; and determining, in a case the uplink traffic has an uplink period, whether the uplink traffic is abnormal based on the uplink period.

In an embodiment, determining that the traffic in the uplink traffic has similarity includes: calculating fingerprints of the traffic in the uplink traffic; clustering the fingerprints of the traffic in the uplink traffic to obtain multiple clusters; and determining that the traffic in the uplink traffic has similarity, in a case that any of the clusters has traffic proportion greater than a preset proportion threshold.

In an embodiment, the clustering the fingerprints of the traffic in the uplink traffic includes: for each of the fingerprints of the traffic in the uplink traffic, taking the fingerprint as a transform object, calculating importance values of each of components of the transform object to the transform object, respectively; and converting the components of the transform object to the importance values, correspondingly, to transform the transform object into a word vector; and clustering all word vectors obtained through the transformation.

In an embodiment, the determining, based on the sequence of numbers of occurrences, whether the uplink traffic has an uplink period includes: sorting elements in the sequence of numbers of occurrences in a descending order based on values of the elements to obtain a descending sequence; selecting an element at a preset position in the descending sequence; in a case that the selected element is less than or equal to a preset second threshold, determining a first algorithm as a periodicity detection algorithm corresponding to the sequence of numbers of occurrences, and detecting the sequence of numbers of occurrences by using the first algorithm to determine whether the uplink traffic has an uplink period; and in a case that the selected element is greater than the preset second threshold, determining a second algorithm as the periodicity detection algorithm corresponding to the sequence of numbers of occurrences, and detecting the sequence of numbers of occurrences by using the second algorithm to determine whether the uplink traffic has an uplink period. A period suitable to be calculated through the first algorithm is greater than a period suitable to be calculated through the second algorithm.

In an embodiment, the detecting the sequence of numbers of occurrences by using the first algorithm includes: reducing a maximum value in the sequence of numbers of occurrences, and smoothing, through a sliding average filtering, the sequence of numbers of occurrences after the reduction to obtain a target sequence; plotting a curve based on elements in the target sequence, and performing statistics on peak values and valley values in the curve to obtain a sequence of peak values and a sequence of valley values; deleting a first element and a last element from the sequence of peak values to obtain a new sequence of peak values; deleting a first element and a last element from the sequence of valley values to obtain a new sequence of valley value; subtracting, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtracting, for every two adjacent elements in the new sequence of peak values, a former one of the adjacent elements from a later one of the adjacent elements to obtain a sequence of peak value differences; subtracting, for every two adjacent elements in the new sequence of valley values, a former one of the adjacent elements from a later one of the adjacent elements to obtain a sequence of valley value differences; determining that the uplink traffic does not have the uplink period, in a case that the number of elements in the new sequence of peak values is not equal to the number of elements in the new sequence of valley values; in a case that for each of the sequence of differences of corresponding elements, the sequence of peak value differences and the sequence of valley value differences has a dispersion degree not greater than a dispersion degree threshold, calculating the uplink period of the uplink traffic based on an average of the elements in the sequence of differences of corresponding elements and an average of the elements in the target sequence, and determining that the uplink traffic has the uplink period; determining that the uplink traffic does not have the uplink period, in a case that any one of the sequence of differences of corresponding elements, the sequence of peak value differences and the sequence of valley value differences has a dispersion degree greater than the dispersion degree threshold.

In an embodiment, the reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

In an embodiment, the detecting the sequence of numbers of occurrences by using the second algorithm includes: obtaining, from the descending sequence, an element e at an E-th position and an element f at an F-th position; deleting, from the sequence of numbers of occurrences, an element not falling within an interval [e, f], and calculating an average of the remaining elements; and determining a ratio of a time length of the time window to the average as the uplink period of the uplink traffic, and determining that the uplink traffic has an uplink period.

In an embodiment, the traffic detection method further includes: recording a source IP, a destination IP, and an uplink period of uplink traffic in the abnormal traffic, and adding an abnormity flag for at least one of the source IP or the uplink traffic.

In a second aspect, traffic detection apparatus is provided according to the present disclosure. The apparatus includes: an obtaining module, configured to obtain communication traffic between a target host and other devices; a grouping module, configured to group path-sharing traffic in the communication traffic based on a preset time interval to obtain traffic groups for different transmission time periods; a statistics module, configured to perform statistics for a feature set of traffic transmission from each of the traffic groups; and a detection module, configured to determine whether the path-sharing traffic is abnormal based on a statistical result of identical ones of the feature sets of traffic transmission.

In an embodiment, the feature set of traffic transmission in traffic group includes any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets.

In an embodiment, the traffic detection apparatus further includes a certificate detection module. The certificate detection module is configured to obtain certificate information of the uplink traffic in the path-sharing traffic, where the uplink traffic refers to traffic from one of the other devices to the target host; and trigger, in a case that the certificate information fails to meet a preset security condition, steps of: grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission.

In an embodiment, the case that the certificate information fails to meet a preset security condition includes at least one of the following: a certificate in the certificate information being self-signed, a certificate in the certificate information being encrypted in a free manner, and a certificate in the certificate information is not authenticated by the target host.

In an embodiment, the detection module is specifically configured to: determine, as the statistical result, a ratio of a number of identical feature sets of traffic transmission to a total number of feature sets of traffic transmission; determine that the path-sharing traffic is abnormal, in a case that the statistical result is greater than a preset first threshold; and determine that the path-sharing traffic is normal in a case that the statistical result is less than or equal to the preset first threshold.

In an embodiment, the traffic detection apparatus further includes a periodicity detection module. The periodicity detection module is configured to: determine, by using a sliding time window, a number of occurrences of uplink traffic of the path-sharing traffic within each time window, to obtain a sequence of numbers of occurrences, where the uplink traffic refers to traffic from one of the other devices to the target host; determine, based on the sequence of numbers of occurrences, whether the uplink traffic has an uplink period; and determine, in a case the uplink traffic has an uplink period, whether the uplink traffic is abnormal based on the uplink period.

In an embodiment, the traffic detection apparatus further includes: a summarizing module, configured to summarize a determination result for the path-sharing traffic and a determination result for the uplink traffic to obtain a comprehensive determination result.

In an embodiment, the traffic detection apparatus further includes a dispersion degree determination module. The dispersion degree determination module is configured to: determine, by using a sliding time window, at least one of a size of downlink traffic or a size of uplink traffic in the path-sharing traffic communicated within each time window, to obtain at least one of a sequence of sizes of the uplink traffic and a sequence of sizes of the downlink traffic; and trigger, in a case that a dispersion degree of elements in the at least one of the sequence of sizes of the uplink traffic and the sequence of sizes of the downlink traffic is not greater than a dispersion degree threshold, steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

In an embodiment, the traffic detection apparatus further includes a similarity detection module. The similarity detection module is configured to trigger, in a case that traffic in the uplink traffic has similarity, the steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

In an embodiment, the similarity detection module is specifically configured to: calculate fingerprints of the traffic in the uplink traffic; cluster the fingerprints of the traffic in the uplink traffic to obtain multiple clusters; and determine that the traffic in the uplink traffic has similarity, in a case that any of the clusters has traffic proportion greater than a preset proportion threshold.

In an embodiment, the similarity detection module is specifically configured to: for each of the fingerprints of the traffic in the uplink traffic, take the fingerprint as a transform object, calculate importance values of each of components of the transform object to the transform object, respectively; and convert the components of the transform object to the importance values, correspondingly, to transform the transform object into a word vector; and cluster all word vectors obtained through transformation.

In an embodiment, the periodicity detection module is specifically configured to: sort elements in the sequence of numbers of occurrences in a descending order based on values of the elements to obtain a descending sequence; select an element at a preset position in the descending sequence; in a case that the selected element is less than or equal to a preset second threshold, determine a first algorithm as a periodicity detection algorithm corresponding to the sequence of numbers of occurrences, and detect the sequence of numbers of occurrences by using the first algorithm to determine whether the uplink traffic has an uplink period; and in a case that the selected element is greater than the preset second threshold, determine a second algorithm as the periodicity detection algorithm corresponding to the sequence of numbers of occurrences, and detect the sequence of numbers of occurrences by using the second algorithm to determine whether the uplink traffic has an uplink period. A period suitable to be calculated through the first algorithm is greater than a period suitable to be calculated through the second algorithm.

In an embodiment, the periodicity detection module is specifically configured to: reduce a maximum value in the sequence of numbers of occurrences, and smooth, through a sliding average filtering, the sequence of numbers of occurrences after the reduction to obtain a target sequence; plotting a curve based on elements in the target sequence, and perform statistics on peak values and valley values in the curve to obtain a sequence of peak values and a sequence of valley values; delete a first element and a last element from the sequence of peak values to obtain a new sequence of peak values; delete a first element and a last element from the sequence of valley values to obtain a new sequence of valley value; subtract, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtract, for every two adjacent elements in the new sequence of peak values, a former one of the adjacent elements from a later one of the adjacent elements to obtain a sequence of peak value differences; subtract, for every two adjacent elements in the new sequence of valley values, a former one of the adjacent elements from a later one of the adjacent elements to obtain a sequence of valley value differences; determine that the uplink traffic does not have the uplink period, in a case that the number of elements in the new sequence of peak values is not equal to the number of elements in the new sequence of valley values; in a case that for each of the sequence of differences of corresponding elements, the sequence of peak value differences and the sequence of valley value differences has a dispersion degree not greater than a dispersion degree threshold, calculate the uplink period of the uplink traffic based on an average of the elements in the sequence of differences of corresponding elements and an average of the elements in the target sequence, and determine that the uplink traffic has the uplink period; determine that the uplink traffic does not have the uplink period, in a case that any one of the sequence of differences of corresponding elements, the sequence of peak value differences and the sequence of valley value differences has a dispersion degree greater than the dispersion degree threshold.

In an embodiment, the maximum value in the sequence of numbers of occurrences is reduced by: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

In an embodiment, the periodicity detection module is specifically configured to: obtain, from the descending sequence, an element e at an E-th position and an element f at an F-th position; delete, from the sequence of numbers of occurrences, an element not falling within an interval [e, f], and calculating an average of the remaining elements; and determine a ratio of a time length of the time window to the average as the uplink period of the uplink traffic, and determining that the uplink traffic has an uplink period.

In an embodiment, the traffic detection apparatus further includes a recording module. The recording module is configured to: record a source IP, a destination IP, and an uplink period of uplink traffic in the abnormal traffic, and add an abnormity flag for at least one of the source IP or the uplink traffic.

In a third aspect, an electronic device is provided according to the present disclosure. The electronic device includes a memory and a processor. The memory stores a computer program. The processor is configured to execute the computer program to implement the traffic detection method as described above.

In a fourth aspect, a readable storage medium is provided according to the present disclosure. The readable storage medium stores a computer program. The computer program, when executed by a processor, implements the traffic detection method as described above.

In a fifth aspect, a computer program is provided according to the present disclosure. The computer program, when executed on a computer, causes the computer to implement the traffic detection method as described above.

As can be seen from the above, traffic detection method is provided according to the present disclosure. The method incudes: obtaining communication traffic between a target host and other devices; grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission.

It can be seen that in the present disclosure, for the communication traffic between the target host and the devices, the path-sharing traffic in the communication traffic is grouped based on the preset time interval, so that the traffic groups for different transmission time periods are obtained. Then, the statistics is performed on the feature set of traffic transmission in each of the traffic groups. Finally, it is determined whether the path-sharing traffic is abnormal based on a statistical result of identical ones of the feature sets of traffic transmission. The feature set of traffic transmission indicates authentic communication of traffic. Therefore, in the present disclosure, abnormal traffic is determined based on the feature sets of traffic transmission of the communication traffic between the target host and the devices during different time periods. All the communication traffic is detected, so that a comprehensiveness of the detection is improved and authentic transmissions of the communication traffic can be detected. Therefore, a rate of mistaken determination is reduced, normal traffic is not easily to be mistakenly determined as malicious traffic, and the accuracy in detecting malicious traffic is improved.

Accordingly, the traffic detection apparatus, the device and the readable storage medium according to the present disclosure also have the above technical effects.

## BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings based on the drawings without any creative effort.

Figure 1 is a flowchart of traffic detection method according to an embodiment of the present disclosure;

Figure 2 is a schematic diagram showing communication between multiple devices and a target host according to an embodiment of the present disclosure;

Figure 3 is a flowchart of traffic detection method according to another embodiment of the present disclosure;

Figure 4 is a flowchart of traffic detection method according to another embodiment of the present disclosure;

Figure 5 is a schematic diagram of traffic detection apparatus according to an embodiment of the present disclosure;

Figure 6 is a schematic diagram of an electronic device according to an embodiment of the present disclosure; and

Figure 7 is a schematic diagram of an electronic device according to another embodiment of the present disclosure.

## DETAILED DESCRIPTION OF EMBODIMENTS

Hereinafter technical solutions of embodiments of the present disclosure are described clearly and completely in conjunction with the drawings of the embodiments of the present disclosure. Apparently, the embodiments described below are only some embodiments rather than all the embodiments of the present disclosure. Any other embodiments obtained by those skilled in the art based on the embodiments in the present disclosure without any creative effort fall within the protection scope of the present disclosure.

The conventional periodicity detection algorithm is not applicable to calculation for both a long period and a short period. That is, periodicity detected by using the conventional periodicity detection algorithm is not accurate. Normal traffic having periodicity is easily to be mistakenly determined as malicious traffic, in a case that traffic is to be determined malicious due to merely the periodicity of the traffic. Therefore, a solution for traffic detection is provided according to the present disclosure, with which authentic transmission of communication traffic can be detected, and accuracy in detecting malicious traffic is improved.

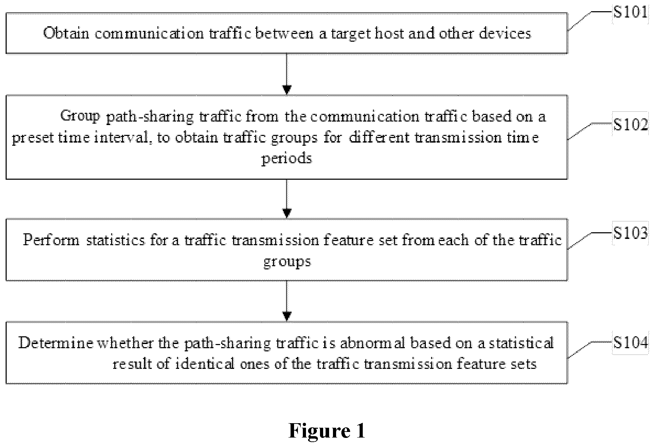

Reference is made to Figure 1. Traffic detection method is provided according to an embodiment of the present disclosure. The traffic detection method includes the following steps S101 to S104.

In S101, communication traffic between a target host and other devices is obtained.

In S102, path-sharing traffic in the communication traffic is grouped based on a preset time interval to obtain traffic groups for different transmission time periods.

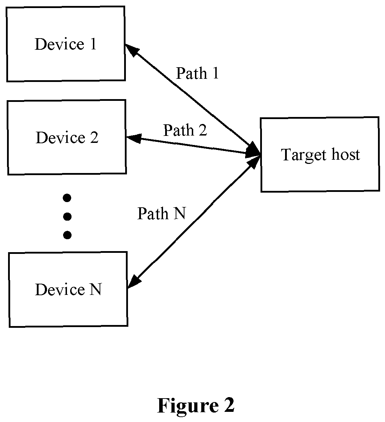

The traffic obtained in S101 refers to traffic transmitted from multiple devices to the target host and traffic transmitted from the target host to the multiple devices over a time period. The path-sharing traffic in the obtained traffic are defined as including traffic from a device to the target host and traffic from the target host to the device. Therefore, the path-sharing traffic includes uplink traffic and downlink traffic which are transmitted through a same path. Reference may be made to Figure 2 for a schematic diagram showing communication between the target host and the devices. A total of communication traffic transmitted through all transmission paths in Figure 2 is considered the traffic obtained in step S101. The obtained traffic may be HTTP messages, TLS (Transport Layer Security) traffics, and the like. The TLS is a security transport layer protocol for ensuring confidentiality and data integrity in data transmission.

In S103, statistics for a feature set of traffic transmission is performed for each of the traffic groups.

In step S104, it is determined whether the path-sharing traffic is abnormal based on a statistical result of identical ones of the feature sets of traffic transmission.

For communication traffic transmitted through any of the transmission paths in Figure 2, the communication traffic may be grouped based on a preset time interval (for example, one hour). For example, communication traffic transmitted through the transmission path from 8:00a.m. to 13:00p.m. is grouped based on an interval of one hour, so that four traffic groups corresponding to four transmission time periods, respectively, are obtained. Statistics for a feature set of traffic transmission is performed for each of the traffic groups, so that four feature sets of traffic transmission are obtained. In an implementation, the feature set of traffic transmission in traffic group includes any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets. Therefore, the feature set of traffic transmission may be a set of numbers. Assuming that two of four sets of numbers are the same, it is determined whether the path-sharing traffic is abnormal based on that "the number of identical feature sets of traffic transmission is two".

It should be noted that in a case that feature sets of traffic transmission for multiple traffic groups are identical to each other, it is determined that communication traffic on a same transmission path has identical transmission features in different transmission time periods. A C2 malicious traffic is generally transmitted with an obvious regularity. Therefore, it may be determined whether the path-sharing traffic is C2 abnormal traffic based on the number of identical feature sets of traffic transmission. In an implementation, a process of determining whether the path-sharing traffic is abnormal based on a statistical result of identical ones of the feature sets of traffic transmission includes: determining that the path-sharing traffic is abnormal, in a case that a ratio of a number of identical feature sets of traffic transmission to a total number of feature sets of traffic transmission is greater than a preset first threshold; and determining that the path-sharing traffic is normal, in a case that the ratio of the number of identical feature sets of traffic transmission to a total number of feature sets of traffic transmission is less than or equal to the preset first threshold.

On determining that the path-sharing traffic is abnormal, the traffic detection method further includes: recording a source IP, a destination IP, and an uplink period of uplink traffic in the abnormal traffic, and adding an abnormity flag for at least one of the source IP or the uplink traffic, so as to conducive to further analysis on traffic having the abnormity flag, such as identifying a specific malicious behavior.

It can be seen that in the present disclosure, for the communication traffic between the target host and the devices, the path-sharing traffic in the communication traffic is grouped based on the preset time interval, so that the traffic groups for different transmission time periods, are obtained. Then, the statistics is performed on the feature set of traffic transmission in each of the traffic groups. Finally, it is determined whether the path-sharing traffic is abnormal based on a statistical result of identical ones of the feature sets of traffic transmission. The feature set of traffic transmission indicates authentic communication of traffic. Therefore, in the present disclosure, abnormal traffic is determined based on the feature sets of traffic transmission of the communication traffic between the target host and the devices during different time periods. All the communication traffic is detected, so that a comprehensiveness of the detection is improved and authentic transmissions of the communication traffic can be detected. Therefore, a rate of mistaken determination is reduced, normal traffic is not easily to be mistakenly determined as malicious traffic, and the accuracy in detecting malicious traffic is improved.

Based on the above embodiments, it should be noted that before grouping the path-sharing traffic, certificate information of uplink traffic in the path-sharing traffic in the communication traffic between the target host and the devices may be detected to determine whether certificates of the devices are secure. Therefore, in an implementation, the traffic detection method further includes: obtaining certificate information of the uplink traffic in the path-sharing traffic, where the uplink traffic refers to traffic from one of the other devices to the target host; and proceeding, in a case that the certificate information fails to meet a preset security condition, to the steps of: grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission. In an implementation, the case that the certificate information fails to meet a preset security condition includes at least one of the following: a certificate in the certificate information being self-signed, a certificate in the certificate information being encrypted in a free manner, and a certificate in the certificate information is not authenticated by the target host. The certificate information may be obtained by parsing the uplink traffic. It is determined that the certificate is self-signed in a case that a CN of an issuer of the certificate is same as a subject CN of the certificate. It is determined that the certificate is encrypted in a free manner, in a case that an O of the issuer of the certificate is "Let's Encrypt". It is determined that the certificate is authenticated by a browser of the target host, in a case that an SNI (Server Name Indication) is in an SAN (Subject Alternate Name); and otherwise, it is determined that the certificate is not authenticated. The SNI is acquired from ClientHello when submitting a request, and the SAN is acquired by parsing the certificate.

Based on the above embodiments, it should be noted that since messages for a C2 server accessing an attacked host generally have periodicity, it may be determined whether traffic is abnormal by detecting whether the uplink traffic has periodicity. Therefore, in an implementation, the traffic detection method further includes: determining, by using a sliding time window, a number of occurrences of uplink traffic of the path-sharing traffic within each time window, to obtain a sequence of numbers of occurrences, where the uplink traffic refers to traffic from one of the other devices to the target host; determining, based on the sequence of numbers of occurrences, whether the uplink traffic has an uplink period; and determining, in a case the uplink traffic has an uplink period, whether the uplink traffic is abnormal based on the uplink period.

In a case that a determination result for the path-sharing traffic is obtained based on the statistic result about identical feature sets of traffic transmission, and a determination result for the uplink traffic is obtained based on the uplink period, the determination result for the path-sharing traffic and the determination result for the uplink traffic may be summarized to obtain a comprehensive determination result. Thereby, it is determined whether the traffic is abnormal based on the comprehensive determination result.

The number of occurrences of uplink traffic of the path-sharing traffic within each time window is determined by using the sliding time window, so as to obtain a sequence of numbers of occurrences. For example, it is assumed that the time window covers 30 seconds and slides by 2 seconds each time. The number of occurrences of traffic within an interval from a 0th second to a 29th second is obtained, the number of occurrences of traffic within an interval from a 2nd second to a 31st second is obtained, and so on. In this way, a sequence of numbers of occurrences $\{x_1, x_2,..., x_n\}$ is obtained, where $x_1$ represents the number of occurrences of traffic within the interval from the 0th second to the 29th second. The number of occurrences of traffic within a time window refers to the number of communications within the time window, which may be represented by number of transmissions of uplink data.

In an implementation, at least one of a size of downlink traffic or a size of uplink traffic may be recorded for communication traffic in the path-sharing traffic, so as to determine a dispersion degree of the at least one of size of downlink traffic or a size of uplink traffic. It is determined that the at least one of size of downlink traffic or a size of uplink traffic has a small probability of having periodicity in a case of a large dispersion degree of the at least one of size of downlink traffic or a size of uplink traffic. Otherwise, it is determined that the at least one of size of downlink traffic or a size of uplink traffic has a large probability of having periodicity. In an implementation, at least one of a size of downlink traffic or a size of uplink traffic in the path-sharing traffic communicated within each time window is determined by using a sliding time window, to obtain at least one of a sequence of sizes of the uplink traffic and a sequence of sizes of the downlink traffic; and in a case that a dispersion degree of elements in the at least one of the sequence of sizes of the uplink traffic and the sequence of sizes of the downlink traffic is not greater than a dispersion degree threshold, the method proceeds to the steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

The dispersion degree threshold may be equal to a product of an average of elements in the sequence and a preset ratio r. The dispersion degree of the elements in a sequence may be represented by a standard deviation of the elements in the sequence.

In order to avoid detecting periodicity of non-periodic path-sharing traffic, it is determined, before determining the sequence of numbers of occurrences, whether traffic in the uplink traffic has similarity. In a case that the traffic in the uplink traffic has similarity, the traffic has a large probability of having similarity. Otherwise, the traffic has a small probability of having similarity. Therefore, in an implementation, in a case that traffic in the uplink traffic has similarity, the method proceeds to the steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

In an implementation, a process of determining that the traffic in the uplink traffic has similarity includes: calculating fingerprints of the traffic in the uplink traffic; clustering the fingerprints of the traffic in the uplink traffic to obtain multiple clusters; and determining that the traffic in the uplink traffic has similarity, in a case that any of the clusters has traffic proportion greater than a preset proportion threshold. In an assumption, three clusters a, b and c are obtained from S fingerprints through the clustering, the cluster a includes fingerprints in a quantity of A, the cluster b includes fingerprints in a quantity of B, and the cluster c includes fingerprints in a quantity of C. Traffic proportion of the cluster a is expressed as A/S, traffic proportion of the cluster b is expressed as B/S, and traffic proportion of the cluster c is expressed as C/S. Therefore, each of A/S, B/S and C/S is compared with the preset proportion threshold. In a case that at least one of A/S, B/S and C/S is greater than the preset proportion threshold, it is determined that most of the traffic in the uplink traffic has similarity. Thereby, it is determined that traffic in the uplink traffic has the similarity. The clustering may be realized by using DBSCAN or other algorithms. The DBSCAN is a clustering algorithm based on high-density connected regions, and is capable of dividing regions having a high density into clusters and finding a cluster in an arbitrary shape from noisy data.

In a case that the traffic is HTTP messages, a fingerprint of the traffic includes a request header fingerprint and a request body fingerprint. The request header fingerprint includes a local sensitive hash value of a designated domain value. Specifically, the request header fingerprint may include any one or a combination of: a logarithm of a total length of request parameters, a quantity of the request parameters, a logarithm of an average length of the request parameters, a logarithm of a length of a uri, a quantity of hierarchies of a directory of the uri, a document extension, a request method type, a version of HTTP, abbreviations of domain names of header domains of request headers of the HTTP, abbreviations of domain names of header names of a part of the request headers of the HTTP, and local sensitive hash vales of domain values of header domains of a part of the request headers of the HTTP. The part of the request headers whose local sensitive hash values are calculated may include any one or a combination of: Connection, Accept-Encoding, Content-Encoding, Cache-Control, Te, Accept-Charset, Content-Type, Accept, Accept-Language, User-Agent, and the like. These features in the request header fingerprint are recorded at intervals of a space. In an example, the request body fingerprint includes any one or a combination of: entropy of a request body, a logarithm of a length of the request body, and the like. These features in the request body fingerprint are recorded at intervals of a space.

In an implementation, a process of clustering the fingerprints of the traffic in the uplink traffic includes: for each of the fingerprints of the traffic in the uplink traffic, taking the fingerprint as a transform object, calculating importance values of each of components of the transform object to the transform object, respectively; and converting the components of the transform object to the importance values, correspondingly, to transform the transform object into a word vector; and clustering all word vectors obtained through the transformation.

A fingerprint may be transformed into a word vector by using a TF-IDF algorithm. In an example, in a case that traffic is an HTTP message, hash values in the fingerprint of the traffic may be split into characters and other features in the fingerprint may be split based on spaces. In this way, components of the fingerprint are obtained. For each of the components, a importance value corresponding to the component is calculated and the component is mapped to the importance value. Thereby, a group of data is obtained through mapping, and the group of data is a word vector obtained by transforming the fingerprint. The TF-IDF is a weighting method generally applied for information retrieval and text mining. The TF-IDF is capable of evaluating importance of a word to a document in a document set or a corpus. The importance of a word is directly proportional to the number of occurrences of the word in the document, and inversely proportional to a frequency of occurrences of the word in the corpus.

In the TF-IDF, the term frequency (TF) refers to a frequency of occurrences of a given word in a document. The number of texts is normalized to prevent the document from being a long document. For words in a certain document, the TF is calculated as

$$TF_{i,j} = \frac{n_{i,j}}{\sum_k n_{k,j}}$$

, where $n_{i,j}$ represents the number of occurrences of a word $t_i$ in a document $d_j$, and the denominator represents a sum of numbers of occurrences of all words in the document $d_j$. The inverse document frequency (IDF) indicates a measurement of general importance of a word. The IDF of a certain word is calculated

$$IDF_i = \log \frac{|D|}{|\{j : t_i \in d_j\}| + 1}$$

as , where |D| represents a total number of documents in a corpus, $|\{j : t_i \in d_j\}|$ represents the number of documents which belong to the corpus and include the word $t_i$. There has $TF\text{-}IDF_{i,j} = TF_{i,j} * IDF_i$. An importance of a given word to a document may be determined based on the TF and the IDF. Based on this principle, a fingerprint can be transformed into a word vector.

Based on the above embodiments, it should be noted that in an embodiment, a periodicity detection algorithm suitable for a certain sequence of numbers of occurrences may be determined. For example, the periodicity detection algorithm may be determined based on a specific element in the sequence of numbers of occurrences. Therefore, in an implementation, a process of determining, based on the sequence of numbers of occurrences, whether the uplink traffic has an uplink period includes: sorting elements in the sequence of numbers of occurrences in a descending order based on values of the elements to obtain a descending sequence; selecting an element at a preset position in the descending sequence; in a case that the selected element is less than or equal to a preset second threshold, determining a first algorithm as a periodicity detection algorithm corresponding to the sequence of numbers of occurrences, and detecting the sequence of numbers of occurrences by using the first algorithm to determine whether the uplink traffic has an uplink period; and in a case that the selected element is greater than the preset second threshold, determining a second algorithm as the periodicity detection algorithm corresponding to the sequence of numbers of occurrences, and detecting the sequence of numbers of occurrences by using the second algorithm to determine whether the uplink traffic has an uplink period. A period suitable to be calculated through the first algorithm is greater than a period suitable to be calculated through the second algorithm. The preset position may be, for example, a position at which an upper quartile is located, so that the upper quartile may be selected from the descending sequence and compared with the preset second threshold.

It should be noted that a small period indicates frequent communication, and a large period indicates infrequent communication. The first algorithm is applicable to detecting traffic in the infrequent communication, and the second algorithm is applicable to detecting traffic in the frequent communication. In a case that values of elements in the sequence of numbers of occurrences are relatively large, the communication is frequent and the second algorithm applicable to detecting a small period is selected. In a case that values of elements in the sequence of numbers of occurrences are relatively small, the communication is infrequent and the first algorithm applicable to detecting a large period is selected. Therefore, the first algorithm is referred to as a long period detection algorithm, and the second algorithm is referred to as a short period detection algorithm.

In an implementation, a process of calculating the uplink period by using the first algorithm includes: reducing a maximum value in the sequence of numbers of occurrences, and smoothing, through a sliding average filtering, the sequence of numbers of occurrences after the reduction to obtain a target sequence; plotting a curve based on elements in the target sequence, and performing statistics on peak values and valley values in the curve to obtain a sequence of peak values and a sequence of valley values; deleting a first element and a last element from the sequence of peak values to obtain a new sequence of peak values; deleting a first element and a last element from the sequence of valley values to obtain a new sequence of valley value; subtracting, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtracting, for every two adjacent elements in the new sequence of peak values, a former one of the adjacent elements from a later one of the adjacent elements to obtain a sequence of peak value differences; subtracting, for every two adjacent elements in the new sequence of valley values, a former one of the adjacent elements from a later one of the adjacent elements to obtain a sequence of valley value differences; determining that the uplink traffic does not have the uplink period, in a case that the number of elements in the new sequence of peak values is not equal to the number of elements in the new sequence of valley values; in a case that for each of the sequence of differences of corresponding elements, the sequence of peak value differences and the sequence of valley value differences has a dispersion degree not greater than a dispersion degree threshold, calculating the uplink period of the uplink traffic based on an average of the elements in the sequence of differences of corresponding elements and an average of the elements in the target sequence, and determining that the uplink traffic has the uplink period; determining that the uplink traffic does not have the uplink period, in a case that any one of the sequence of differences of corresponding elements, the sequence of peak value differences and the sequence of valley value differences has a dispersion degree greater than the dispersion degree threshold. In an implementation, a process of reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

The calculating the uplink period of the uplink traffic based on an average of the elements in the sequence of differences of corresponding elements and an average of the elements in the target sequence includes: dividing the average of the elements in the sequence of differences of corresponding elements by the average of the elements in the target sequence to obtain the period of the uplink traffic.

In an implementation, a detection process of the first algorithm (long period detection algorithm) includes the following steps (1) to (7).

In step (1), an upper ninth quintile is determined for a sequence of numbers of occurrences $X=\{x_1, x_2,......, x_n\}$, and the upper ninth quintile is determined as a target element. Then, an element which is in the sequence X of numbers of occurrences and greater than the target element is amended to the target element.

In step (2), the sequence X after the amending is smoothed through sliding average filtering to obtain a new sequence, namely, a target sequence. A curve plotted based on the target sequence is smoother and more regular. The average filtering may be affected by a few values with large differences and some outliers with large differences cannot be eliminated, so that step (1) is performed.

Through the sliding average filtering, a sequence obtained through continuous sampling is transformed into a new sequence, and a process thereof is described below. A sliding window having a size of w is set. Elements in the sequence X are sequentially entered to the sliding window w one by one. One element enters the sliding window each time, and the number of elements within the sliding window does not exceed w. An average of the elements in the sliding window is calculated and recorded. Each time one element is newly added to the sliding window and the number of elements in the sliding window is equal to w+1, a leading element in the sliding window is removed to control the number of elements in the sliding window to be equal to w. Then an average of all elements in the sliding window is calculated and recorded.

Based on the above principle, for the sequence of numbers of occurrences $X=\{x_1, x_2,......, x_n\}$, averages are expressed as:

$$\frac{x_1}{w}, \ \frac{x_1+x_2}{w}, ... \ \frac{x_1+x_2+...+x_w}{w}, ... \ \frac{x_n}{w}$$

. In this way, the number of the averages is greater than n. In order to keep the number of the averages to be consistent with a length of the original sequence of numbers of occurrences, n averages in the middle of the averages are selected to form the target sequence. For example, a first one of the averages is removed from the averages, and then it is determined whether the number of the remaining averages is equal to n; and the last one of the averages is then removed from the averages in a case that the number of the remaining averages is not equal to n and it is determined whether the number of the remaining averages is equal to n. The above operations are repeated until the number of the remaining averages is equal to n.

In step (3), a curve is plotted based on the elements in the target sequence. A sequence of peak values $A=\{a_1, a_2,..., a_{n-1}, a_n\}$ and a sequence of valley values $B=\{b_1, b_2,..., b_{n-1}, b_n\}$ are obtained through statistics. In the sequences, $a_1, a_2,..., a_{n-1}, a_n$ are arranged in a chronological order, and $b_1, b_2,..., b_{n-1}, b_n$ are arranged in a chronological order.

In step (4), in order to ensure integrity of the period outputted finally , a first element and a last element in the sequence of peak values are removed to obtain a new sequence of peak values $A_s=\{a_2,...a_i,..., a_{n-1}\}$. A first element and a last element in the sequence of valley values are removed to obtain a new sequence of valley values $B_s=\{b_2,...b_j,...,b_{n-1}\}$.

In step (5), it is determined whether the number of elements in $A_s$ is equal to the number of the elements in $B_s$. A period can be calculated in a case that the number of elements in $A_s$ is equal to the number of elements in $B_s$. It is determined that no period can be calculated in a case that the number of elements in $A_s$ is not equal to the number of elements in $B_s$. In this case, a prompt indicating that the traffic does not have periodicity may be outputted. As can be seen, applying of the periodicity detection algorithm can output a determination result indicating whether the traffic has periodicity, and a period in a case of the traffic having the periodicity.

In step (6), in a case that the period can be calculated, the elements in $B_s$ are subtracted from the elements at corresponding positions in $A_s$, respectively, to obtain a sequence C of differences of corresponding elements. For every two adjacent elements in $A_s$, a former one of the adjacent elements is subtracted from a later one of the adjacent elements to obtain a sequence E of peak value differences. For every two adjacent elements in $B_s$, a former one of the adjacent elements is subtracted from a later one of the adjacent elements to obtain a sequence F of valley value differences. There has $C=\{c_2,...,c_k,...,c_{n-1}\}$, $c_k=a_k-b_k$, $a_k \in A_s$, $b_k \in B_s$, $E=\{a_3-a_2,...,a_i-a_{i-1},...,a_n-a_{n-1}\}$, and F can be obtained with reference to E.

In step (7), dispersion degrees of C, E and F are determined. In a case that each of the C, E and F has a dispersion degree not greater than a corresponding dispersion degree threshold, an average of the elements in C is divided by an average of the elements in X after the sliding average filtering to obtain an estimated period. Otherwise, it is determined that the traffic does not have periodicity.

The dispersion degree threshold may be a product of a preset scale r and an average of the elements in C, E or F. The dispersion degree of any of C, E and F may be expressed by a standard deviation. That is, while determining the dispersion degree of C, the dispersion degree threshold is equal to a product of an average of elements in C and the preset scale r. while determining the dispersion degree of E, the dispersion degree threshold is equal to a product of an average of elements in E and the preset scale r. While determining the dispersion degree of F, the dispersion degree threshold is equal to a product of an average of elements in F and the preset scale r.

In an implementation, a process of calculating the uplink period by using the second algorithm includes: obtaining, from the descending sequence, an element e at an E-th position and an element f at an F-th position; deleting, from the sequence of numbers of occurrences, an element not falling within an interval [e, f], and calculating an average of the remaining elements; and determining a ratio of a time length of the time window to the average as the uplink period of the uplink traffic, and determining that the uplink traffic has an uplink period.. The element e is an upper quartile, and the element f is a lower quartile.

In an implementation, a detection process of the second algorithm (short period detection algorithm) includes the following steps (1) to (3).

In step (1), an upper quartile p and a lower quartile q are determined for the sequence of numbers of occurrences $X=\{x_1, x_2,..., x_n\}$.

In step (2), an element not falling within an interval [p, q] (i.e., an interval [e, f]) is deleted from the sequence X of numbers of occurrences, and an average of the remaining elements is calculated.

In step (3), a time length T of the sliding time window is divided by the average as an access period, and it is determined that the traffic has periodicity.

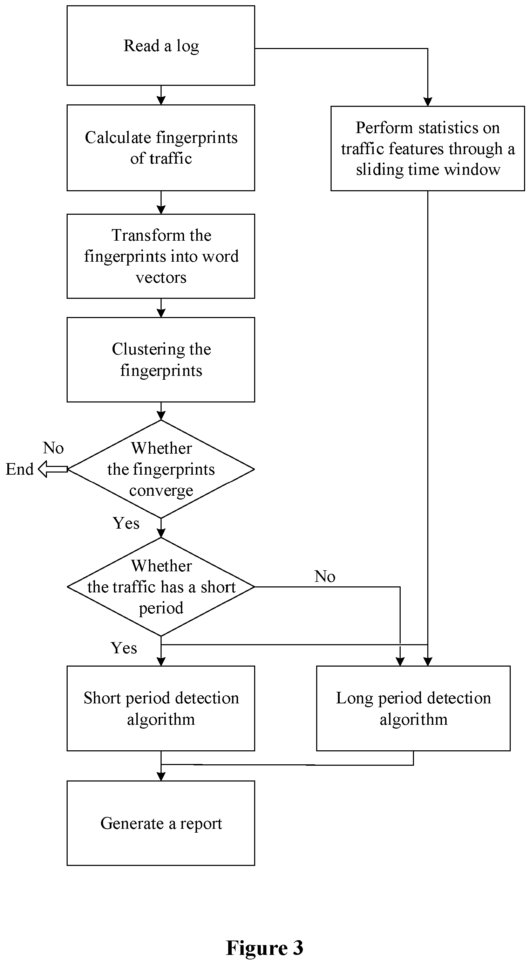

Reference is made to Figure 3. The present disclosure is descried trough the following embodiments by taking HTTP traffic as an example. A method as shown in Figure 3 includes the following steps 1 to 6.

In step 1, a log is read.

HTTP traffic for accessing a target host is read as a log file.

In step 2, fingerprints of the traffic are calculated.

A fingerprint of an HTTP traffic includes a request header fingerprint and a request body fingerprint. The fingerprint is a character string formed by elements combined by using a space as a separator. The request header fingerprint includes: a logarithm of a total length of request parameters, a quantity of the request parameters, a logarithm of an average length of the request parameters, a logarithm of a length of a uri, a quantity of hierarchies of a directory of the uri, a document extension, a request method type, a version of HTTP, abbreviations of domain names of header domains of request headers of the HTTP, abbreviations of domain names of header names of a part of the request headers of the HTTP, and local sensitive hash vales of domain values of header domains of a part of the request headers of the HTTP. The part of the request headers whose local sensitive hash values are calculated may include any one or a combination of: Connection, Accept-Encoding, Content-Encoding, Cache-Control, Te, Accept-Charset, Content-Type, Accept, Accept-Language, and User-Agent. The request body fingerprint includes entropy of a request body, and a logarithm of a length of the request body. Apparently, the request header fingerprint and the request body fingerprint may further include other information.

In step 3, statistics is performed on features of the traffic by using a sliding time window.

For the HTTP traffic, a transmission path is designated based on a source IP, a destination IP (an IP of the target host), a destination port and the host. A sliding time window is applied to the traffic transmitted through the transmission path, so as to determine the number of occurrences of traffic within each time window.

In step 4, for the fingerprints of traffic under fixed source IP, destination IP, destination port and host, a vector space model is built based on the fingerprints, in order to measure similarity of the fingerprints. Specifically, the fingerprints may be converted by using the TF-IDF algorithm.

In step 5, word vectors of the fingerprints are clustered and analyzed by using DBSCAN. It is determined whether the fingerprints tend to be consistent (i.e., whether the fingerprints have similarity). The process proceeds to step 6 in a case that the fingerprints tend to be consistent; and otherwise, the method terminates.

In step 6, an upper quartile is calculated for a sequence X of numbers of occurrences obtained based on the traffic on a same transmission path and tending to be consistent. In a case that the upper quartile is greater than a threshold, detection is performed by using the short period detection algorithm. Otherwise, detection is performed by using the long period detection algorithm. After the detection is completed, a report is generated.

As can be seen, a HTTP beacon behavior can be effectively identified in this embodiment. A beacon period can be accurately identified by using the short period detection algorithm and the long period detection algorithm, and the periodicity detection is accurate.

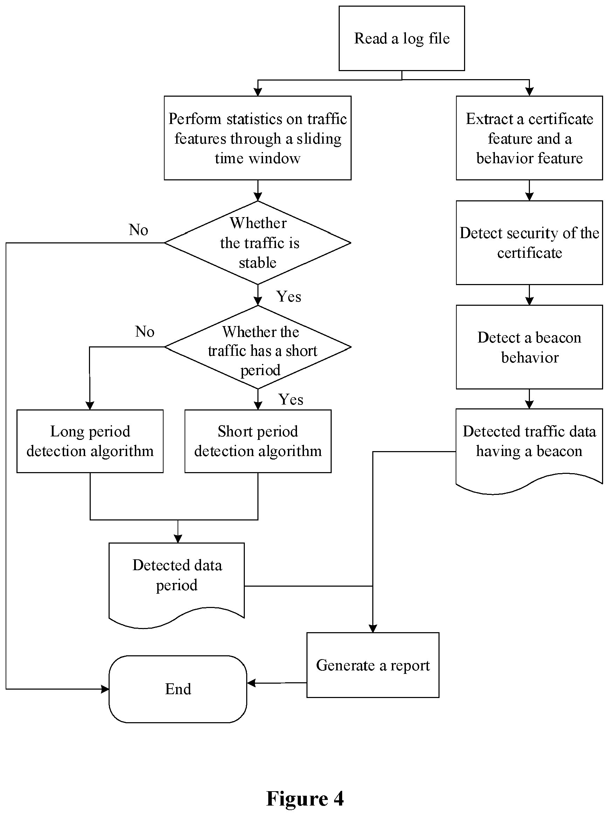

Reference is made to Figure 4. The present disclosure is descried in the following embodiments by taking TLS traffic as an example. The method shown in Figure 4 includes the following steps 1 to 8.

In step 1, a log file is read.

TLS traffic between a target host and other devices are read as a log file.

In step 2, statistics is performed on features of the traffic by using a sliding time window.

For the TLS log file, a transmission path is designated based on a source IP, a destination IP (an IP of the target host), a destination port and the host. A sliding time window is applied to uplink traffic transmitted through the transmission path, so as to determine the number of occurrences of the uplink traffic within each time window. In addition, a sliding time window is applied to traffic transmitted through the transmission path to determine a size of downlink traffic and a size of uplink traffic of traffic within each time window. Since the size of uplink traffic and the size of downlink traffic keep changing, the size of uplink traffic and the size of downlink traffic are distributed into buckets so as to reduce workload for statistics.

In step 3, stability test is performed on the uplink traffic and the downlink traffic based on the size of the uplink traffic and the size of the downlink traffic obtained through the statistics. The method proceeds to step 4, in a case that the stability test is passed; and otherwise, the method terminates. The stability test is performed on the uplink traffic and the downlink traffic by: determining dispersion degrees of the size of the uplink traffic and the size of the downlink traffic obtained through the statistics; determining that the stability test is passed, in a case that the dispersion degree of any of the size of the uplink traffic and the size of the downlink traffic is small; and otherwise, determining that stability test fails.

In step 4, periodicity detection is performed on the sequence of numbers of occurrences by using different periodicity detection algorithms after the stability test is passed. An upper quartile is calculated for a sequence X of numbers of occurrences. In a case that the upper quartile is greater than a threshold, the detection is performed by using a short period detection algorithm. Otherwise, the detection is performed by using a long period detection algorithm.

In step 5, certificate features and behavior features are extracted from the original log.

The certificate features mainly include: whether a certificate in the uplink traffic transmitted through a same transmission path being self-signed, whether the certificate being encrypted in a free manner, whether the certificate being authenticated by a browser, and the like.

The behavior features mainly include: transmission features (i.e., beacon behaviors) of uplink traffic and downlink traffic transmitted through a same transmission path within different time periods. The transmission features include any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets.

In step 6, security detection is performed on the certificate. In a case that a certificate is self-signed, encrypted in a free manner, or not authenticated by a browser, the certificate is suspicious. Otherwise, the certificate is secure.

In step 7, a beacon behavior is detected. In a case that the transmission features of the uplink traffic and the downlink traffic transmitted through a same transmission path fluctuate little within different time periods, the beacon behavior is suspicious. Otherwise, the beacon behavior is secure.

In step 8, suspicious beacon traffic data is determined based on detection results in step 6 and step 7. A report is generated based on the suspicious beacon traffic data and the data period detected in step 4.

It can be seen that in this embodiment, the TLS beacon behavior can be effectively identified. The periodicity detection beacon, the certificate features and the behavior features are adopted so that a beacon detection process is enriched. Thereby, the accuracy of beacon detection is improved. In addition, use of the short period detection algorithm and the long period detection algorithm can realize a better accuracy of the detected periodicity than use of a general periodicity detection algorithm.

Traffic detection apparatus according to an embodiment of the present disclosure is described below. The traffic detection apparatus described below and the traffic detection method described above may be referred to each other.

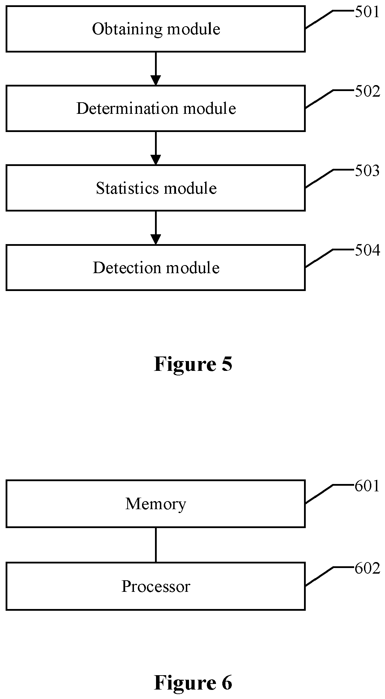

Reference is made to Figure 5. Traffic detection apparatus is provided according to an embodiment of the present disclosure. The apparatus includes an obtaining module 501, a grouping module 502, a statistics module 503 and a detection module 504.

The obtaining module 501 is configured to obtain communication traffic between a target host and other devices.

The grouping module 502 is configured to group path-sharing traffic in the communication traffic based on a preset time interval to obtain traffic groups for different transmission time periods.

The statistics module 503 is configured to perform statistics for a feature set of traffic transmission from each of the traffic groups.

The detection module 504 is configured to determine whether the path-sharing traffic is abnormal based on a statistical result of identical ones of the feature sets of traffic transmission.

In an implementation, the feature set of traffic transmission in traffic group includes any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets.

In an implementation, the traffic detection apparatus further includes a certificate detection module. The certificate detection module is configured to obtain certificate information of the uplink traffic in the path-sharing traffic, where the uplink traffic refers to traffic from one of the other devices to the target host; and trigger, in a case that the certificate information fails to meet a preset security condition, steps of: grouping path-sharing traffic in the communication traffic based on a preset time interval to obtain traffic groups for different transmission time periods; performing statistics for a feature set of traffic transmission from each of the traffic groups; and determining whether the path-sharing traffic is abnormal based on a statistical result of identical ones of the feature sets of traffic transmission.

In an implementation, the case that the certificate information fails to meet a preset security condition includes at least one of the following: a certificate in the certificate information being self-signed, a certificate in the certificate information being encrypted in a free manner, and a certificate in the certificate information is not authenticated by the target host.

In an implementation, the detection module is specifically configured to: determine, as the statistical result, a ratio of a number of identical feature sets of traffic transmission to a total number of feature sets of traffic transmission; determine that the path-sharing traffic is abnormal, in a case that the statistical result is greater than a preset first threshold; and determine that the path-sharing traffic is normal in a case that the statistical result is less than or equal to the preset first threshold.

In an implementation, the traffic detection apparatus further includes a periodicity detection module. The periodicity detection module is configured to: determine, by using a sliding time window, a number of occurrences of uplink traffic of the path-sharing traffic within each time window, to obtain a sequence of numbers of occurrences, where the uplink traffic refers to traffic from one of the other devices to the target host; determine, based on the sequence of numbers of occurrences, whether the uplink traffic has an uplink period; and determine, in a case the uplink traffic has an uplink period, whether the uplink traffic is abnormal based on the uplink period.

In an implementation, the traffic detection apparatus further includes: a summarizing module, configured to summarize a determination result for the path-sharing traffic and a determination result for the uplink traffic to obtain a comprehensive determination result.

In an implementation, the traffic detection apparatus further includes a dispersion degree determination module. The dispersion degree determination module is configured to: determine, by using a sliding time window, at least one of a size of downlink traffic or a size of uplink traffic in the path-sharing traffic communicated within each time window, to obtain at least one of a sequence of sizes of the uplink traffic and a sequence of sizes of the downlink traffic; and trigger, in a case that a dispersion degree of elements in the at least one of the sequence of sizes of the uplink traffic and the sequence of sizes of the downlink traffic is not greater than a dispersion degree threshold, steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

In an implementation, the traffic detection module further includes a similarity detection module. The similarity detection module is configured to trigger, in a case that traffic in the uplink traffic has similarity, the steps of: determining, by using a sliding time window, a number of occurrences of uplink traffic of the path-sharing traffic within each time window, to obtain a sequence of numbers of occurrences; determining, based on the sequence of numbers of occurrences, whether the uplink traffic has an uplink period; and determining, in a case the uplink traffic has an uplink period, whether the uplink traffic is abnormal based on the uplink period.

In an implementation, the similarity detection module is specifically configured to: calculate fingerprints of the traffic in the uplink traffic; cluster the fingerprints of the traffic in the uplink traffic to obtain multiple clusters; and determine that the traffic in the uplink traffic has similarity, in a case that any of the clusters has traffic proportion greater than a preset proportion threshold.

In an implementation, the similarity detection module is specifically configured to: for each of the fingerprints of the traffic in the uplink traffic, take the fingerprint as a transform object, calculate importance values of each of components of the transform object to the transform object, respectively; and convert the components of the transform object to the importance values, correspondingly, to transform the transform object into a word vector; and cluster all word vectors obtained through transformation.

In an implementation, the periodicity detection module is specifically configured to: sort elements in the sequence of numbers of occurrences in a descending order based on values of the elements to obtain a descending sequence; select an element at a preset position in the descending sequence; in a case that the selected element is less than or equal to a preset second threshold, determine a first algorithm as a periodicity detection algorithm corresponding to the sequence of numbers of occurrences, and detect the sequence of numbers of occurrences by using the first algorithm to determine whether the uplink traffic has an uplink period; and in a case that the selected element is greater than the preset second threshold, determine a second algorithm as the periodicity detection algorithm corresponding to the sequence of numbers of occurrences, and detect the sequence of numbers of occurrences by using the second algorithm to determine whether the uplink traffic has an uplink period. A period suitable to be calculated through the first algorithm is greater than a period suitable to be calculated through the second algorithm.

In an embodiment, the periodicity detection module is specifically configured to: reduce a maximum value in the sequence of numbers of occurrences, and smooth, through a sliding average filtering, the sequence of numbers of occurrences after the reduction to obtain a target sequence; plotting a curve based on elements in the target sequence, and perform statistics on peak values and valley values in the curve to obtain a sequence of peak values and a sequence of valley values; delete a first element and a last element from the sequence of peak values to obtain a new sequence of peak values; delete a first element and a last element from the sequence of valley values to obtain a new sequence of valley value; subtract, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtract, for every two adjacent elements in the new sequence of peak values, a former one of the adjacent elements from a later one of the adjacent elements to obtain a sequence of peak value differences; subtract, for every two adjacent elements in the new sequence of valley values, a former one of the adjacent elements from a later one of the adjacent elements to obtain a sequence of valley value differences; determine that the uplink traffic does not have the uplink period, in a case that the number of elements in the new sequence of peak values is not equal to the number of elements in the new sequence of valley values; in a case that for each of the sequence of differences of corresponding elements, the sequence of peak value differences and the sequence of valley value differences has a dispersion degree not greater than a dispersion degree threshold, calculate the uplink period of the uplink traffic based on an average of the elements in the sequence of differences of corresponding elements and an average of the elements in the target sequence, and determine that the uplink traffic has the uplink period; determine that the uplink traffic does not have the uplink period, in a case that any one of the sequence of differences of corresponding elements, the sequence of peak value differences and the sequence of valley value differences has a dispersion degree greater than the dispersion degree threshold.

In an implementation, the maximum value in the sequence of numbers of occurrences is reduced by: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

In an implementation, the periodicity detection module is specifically configured to: obtain, from the descending sequence, an element e at an E-th position and an element f at an F-th position; delete, from the sequence of numbers of occurrences, an element not falling within an interval [e, f], and calculating an average of the remaining elements; and determine a ratio of a time length of the time window to the average as the uplink period of the uplink traffic, and determining that the uplink traffic has an uplink period.

In an implementation, the traffic detection apparatus further includes a recording module. The recording module is configured to: record a source IP, a destination IP, and an uplink period of uplink traffic in the abnormal traffic, and add an abnormity flag for at least one of the source IP or the uplink traffic.

For the detailed operations of the modules and units in the embodiments, reference may be made to corresponding content in the above embodiments, which is not repeated here.

As can be seen, with the traffic detection apparatus provided according to the embodiments, authentic transmission of communication traffic can be detected, so that the accuracy in detecting malicious traffic is improved.

An electronic device according to an embodiment of the present disclosure is described below. The electronic device described below, the traffic detection method and the traffic detection apparatus described above may be referred to each other.

Reference is made to Figure 6. An electronic device is provided according to an embodiment of the present disclosure. The electronic device includes a memory 601 and a processor 602.

The memory 601 stores a computer program.

The processor 602 is configured to execute the computer program to perform the traffic detection method according to any one of the above embodiments.

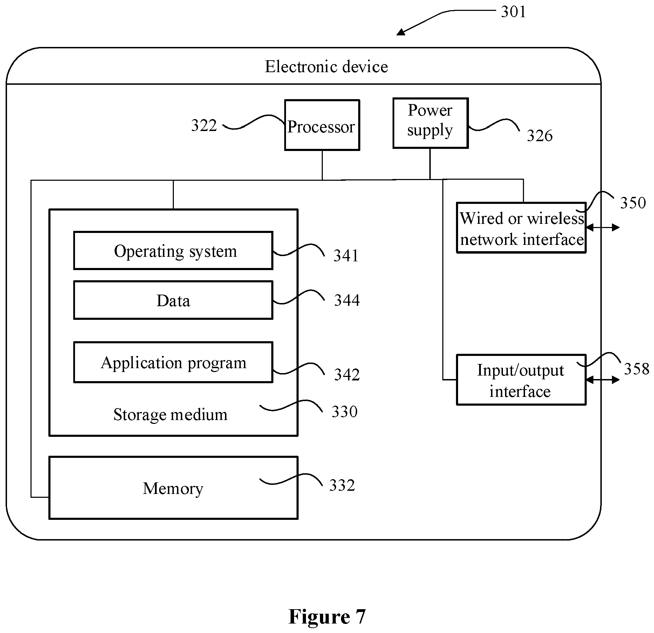

Reference is made to Figure 7, which is a schematic diagram of an electronic device according to another embodiment. The electronic device may vary significantly due to different configurations or performances. The electronic device may include at least one central processing unit (CPU) 322 (for example, one or more processors) and a memory 332, and at least one storage medium 330 (for example, one or more mass storage devices) that store an application program 342 or data 344. The memory 332 and the storage medium 330 may realize temporary storage or persistent storage. The programs stored in the storage medium 330 may include one or more of above-mentioned modules (which are not illustrated in Figure 7). Each of the modules may include a series of instructions to a data processing device. Furthermore, the processer 322 may be configured to communicate with the storage medium 330, and execute the series of instruction in the storage mediums 330 on the electronic device 301.

The electronic device 301 may further include at least one power supply 326, at least one wired or wireless network interface 350, at least one input/output interface 358, and/or at least one operating system 341. The operating system 341 is, for example, Windows ServerTM, Mac OS XTM, UnixTM, LinuxTM, FreeBSDTM, and the like.

In Figure 7, the application program 342 may be for performing the traffic detection method, and the data 344 may be data required for or generated in performing the traffic detection method.

The steps of the traffic detection method described above may be implemented by a structure of the electronic device.

A readable storage medium according to an embodiment of the present disclosure is described below. The readable storage medium described below, the traffic detection method, the traffic detection apparatus, and the device may be referred to each other.

The readable storage medium stores a computer program. The computer program, when executed by a processor, implements the traffic detection method according to the above embodiments. For steps of the method, reference may be made to corresponding content disclosed in the above embodiments, which is not repeated here.

Terms such as "first", "second", "third", "fourth" and the like (if exists) in the present disclosure are used for distinguishing similar objects, and are not used for describing specific orders or sequences. It should be understood that the above terms may be exchanged in proper cases so as to implement the embodiments described herein in other orders than an order shown or described herein. In addition, the terms "include" and "have" and any variations thereof are intended to cover non-exclusive inclusions. For example, a process, a method, or a device that includes a series of steps or units is not limited to those clearly listed steps or units, and may instead include other steps or units not explicitly listed or inherent to the process, method, or device.

It should be noted that, the terms "first", "second" and the like are for description purpose only, and should not be construed as indicating or implying relative importance or implying the number of the indicated technical features. Therefore, the features defined with "first", "second" or the like may include at least one of the features explicitly or implicitly. In addition, the technical solutions in the various embodiments may be combined with each other, on the basis that the combination can be realized by those of ordinary skills in the art. In a case that the combination of technical solutions is contradictory or cannot be realized, it should be considered that such a combination of technical solutions does not exist, and is not within the protection scope of the present disclosure.

The above embodiments in the specification are described in a progressive manner. Each of the embodiments mainly focuses on describing differences of the embodiment from other embodiments. Same or similar parts of the embodiments may be referred to each other.

The steps of the method or algorithm described in conjunction with the embodiments disclosed herein may be directly implemented by hardware, a software module executed by a processor, or a combination thereof. The software module may be arranged in a random access memory (RAM), a memory, a read only memory (ROM), an electrically programmable ROM, an electrically erasable programmable ROM, a register, a hard disk, a removable disk, a CD-ROM, or any other forms of storage medium known in art.

The principles and implementations of the present disclosure are clarified with specific examples herein. The above description of the embodiments is only intended to assist understanding the method and the key concept of the present disclosure. For those skilled in the art, modifications can be made to the specific embodiments and the application scopes based on the concept of the present disclosure, and as above, the specification should not be construed as a limitation to the present disclosure.

**Claims**

1. Traffic detection method, comprising:

obtaining communication traffic between a target host and other devices;
grouping path-sharing traffic in the communication traffic based on a preset time interval to obtain traffic groups for different transmission time periods;
performing statistics for a feature set of traffic transmission from each of the traffic groups; and
determining whether the path-sharing traffic is abnormal based on a statistical result of identical ones of the feature sets of traffic transmission.

2. The traffic detection method according to claim 1, wherein the feature set of traffic transmission in traffic group comprises any one or a combination of: a sum of a number of uplink packets and a number of downlink packets, the number of uplink packets, the number of downlink packets, a size of an uplink packet, a size of a downlink packet, a transmission interval of uplink packets, and a transmission interval of downlink packets.

3. The traffic detection method according to claim 1, wherein the determining whether the path-sharing traffic is abnormal based on a statistical result of identical ones of the feature sets of traffic transmission comprises:

determining, as the statistical result, a ratio of a number of identical feature sets of traffic transmission to a total number of feature sets of traffic transmission;
determining that the path-sharing traffic is abnormal, in a case that the statistical result is greater than a preset first threshold; and
determining that the path-sharing traffic is normal in a case that the statistical result is less than or equal to the preset first threshold.

4. The traffic detection method according to claim 1, further comprising:

determining, by using a sliding time window, a number of occurrences of uplink traffic of the path-sharing traffic within each time window, to obtain a sequence of numbers of occurrences, wherein the uplink traffic refers to traffic from one of the other devices to the target host; determining, based on the sequence of numbers of occurrences, whether the uplink traffic has an uplink period; and determining, in a case the uplink traffic has an uplink period, whether the uplink traffic is abnormal based on the uplink period.

5. The traffic detection method according to claim 4, further comprising:
summarizing a determination result for the path-sharing traffic and a determination result for the uplink traffic to obtain a comprehensive determination result.

6. The traffic detection method according to claim 4, further comprising:

determining, by using a sliding time window, at least one of a size of downlink traffic or a size of uplink traffic in the path-sharing traffic communicated within each time window, to obtain at least one of a sequence of sizes of the uplink traffic and a sequence of sizes of the downlink traffic; and
proceeding, in a case that a dispersion degree of elements in the at least one of the sequence of sizes of the uplink traffic and the sequence of sizes of the downlink traffic is not greater than a dispersion degree threshold, to the steps of: determining, by using a sliding time window, a number of occurrences of uplink traffic of the path-sharing traffic within each time window, to obtain a sequence of numbers of occurrences, wherein the uplink traffic refers to traffic from a device to the target host; determining, based on the sequence of numbers of occurrences, whether the uplink traffic has an uplink period; and determining, in a case the uplink traffic has an uplink period, whether the uplink traffic is abnormal based on the uplink period.

7. The traffic detection method according to claim 4, further comprising:
proceeding, in a case that traffic in the uplink traffic has similarity, to the steps of: determining, by using a sliding time window, a number of occurrences of uplink traffic of the path-sharing traffic within each time window, to obtain a sequence of numbers of occurrences, wherein the uplink traffic refers to traffic from a device to the target host; determining, based on the sequence of numbers of occurrences, whether the uplink traffic has an uplink period; and determining, in a case the uplink traffic has an uplink period, whether the uplink traffic is abnormal based on the uplink period.

8. Traffic detection apparatus, comprising:

an obtaining module, configured to obtain communication traffic between a target host and other devices;
a grouping module, configured to group path-sharing traffic in the communication traffic based on a preset time interval to obtain traffic groups for different transmission time periods;
a statistics module, configured to perform statistics for a feature set of traffic transmission from each of the traffic groups; and
a detection module, configured to determine whether the path-sharing traffic is abnormal based on a statistical result of identical ones of the feature sets of traffic transmission.

9. An electronic device, comprising:

a memory, storing a computer program; and
a processor, configured to execute the computer program to implement the traffic detection method according to any one of claims 1 to 7.

10. A readable storage medium, storing a computer program, wherein
the computer program, when executed by a processor, implements the traffic detection method according to any one of claims 1 to 7.

Obtain communication traffic between a target host and other devices — S101

Group path-sharing traffic from the communication traffic based on a preset time interval, to obtain traffic groups for different transmission time periods — S102

Perform statistics for a traffic transmission feature set from each of the traffic groups — S103

Determine whether the path-sharing traffic is abnormal based on a statistical result of identical ones of the traffic transmission feature sets — S104

**Figure 1**

**Figure 2**

**Figure 3**

Read a log file

Perform statistics on traffic features through a sliding time window

Extract a certificate feature and a behavior feature

No — Whether the traffic is stable

Yes

Detect security of the certificate

No — Whether the traffic has a short period

Yes

Detect a beacon behavior

Long period detection algorithm

Short period detection algorithm

Detected traffic data having a beacon

Detected data period

Generate a report

End

**Figure 4**

| Obtaining module | —501 |
|---|---|

↓

| Determination module | —502 |
|---|---|

↓

| Statistics module | —503 |
|---|---|

↓

| Detection module | —504 |
|---|---|

**Figure 5**

| Memory | —601 |
|---|---|

| Processor | —602 |
|---|---|

**Figure 6**

301

Electronic device

322 — Processor

Power supply

326

Operating system — 341

Data — 344

Application program — 342

Storage medium — 330

Wired or wireless network interface — 350

Input/output interface — 358

Memory — 332

**Figure 7**

## INTERNATIONAL SEARCH REPORT

| | International application No. |
|---|---|
| | **PCT/CN2022/123294** |

**A.   CLASSIFICATION OF SUBJECT MATTER**

H04L 9/40(2022.01)i

According to International Patent Classification (IPC) or to both national classification and IPC

**B.   FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, EPODOC, WPI: C&C, CC, 攻击, 威胁, 异常, 周期, 时间段, 时段, 窗, 统计, 特征, 路径, 链路, 通道, 指纹, attack, error, time, period, window, class, path, source, same, target, channel, link, train+, fingerprint, CNN

**C.   DOCUMENTS CONSIDERED TO BE RELEVANT**

| Category* | Citation of document, with indication, where appropriate, of the relevant passages | Relevant to claim No. |
|---|---|---|
| PX | CN 115086060 A (SANGFOR TECHNOLOGIES INC.) 20 September 2022 (2022-09-20) claims 1-10 | 1-10 |
| X | CN 109391599 A (BLUEDON INFORMATION SECURITY TECHNOLOGY CO., LTD.) 26 February 2019 (2019-02-26) description, paragraphs [0002] -[0054] | 1-10 |
| A | CN 113612657 A (NANJING CLEARCLOUD SOFTWARE TECHNOLOGY CO., LTD.) 05 November 2021 (2021-11-05) entire document | 1-10 |
| A | US 2016191560 A1 (VECTRA NETWORKS, INC.) 30 June 2016 (2016-06-30) entire document | 1-10 |

☐ Further documents are listed in the continuation of Box C.   ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **21 November 2022** | **30 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/123294**

| Patent document cited in search report | | | Publication date (day/month/year) | Patent family member(s) | | | Publication date (day/month/year) |
|---|---|---|---|---|---|---|---|
| CN | 115086060 | A | 20 September 2022 | None | | | |
| CN | 109391599 | A | 26 February 2019 | None | | | |
| CN | 113612657 | A | 05 November 2021 | None | | | |
| US | 2016191560 | A1 | 30 June 2016 | EP | 3215944 | A4 | 13 September 2017 |
| | | | | WO | 2016073379 | A2 | 12 May 2016 |

Form PCT/ISA/210 (patent family annex) (January 2015)

**REFERENCES CITED IN THE DESCRIPTION**

**Patent documents cited in the description**

- CN 202210762423